# FASCICULE DE BREVET EUROPEEN

(11) **EP 0 664 018 B1**
(45) Date de publication et mention de la délivrance du brevet: **30.07.1997**
(21) Numéro de dépôt: 93921995.2
(22) Date de dépôt: 05.10.1993
(51) Int. Cl.: G05D 1/02, A01B 69/00, A47L 11/40

(54) **PROCEDE DE CONTROLE DU DEPLACEMENT D'UNE MACHINE ELECTRIQUE AUTONOME A DEPLACEMENT ALEATOIRE, ET MACHINE ELECTRIQUE APPROPRIEE**
BEWEGUNGSSTEUERUNGSVERFAHREN FÜR EINE AUTONOME IN BELIEBIGE RICHTUNGEN FAHRENDE ELEKTRISCHE MASCHINE UND DAFÜR GEEIGNETE ELEKTRISCHE MASCHINE
METHOD FOR CONTROLLING THE MOVEMENT OF AN AUTONOMOUS RANDOM MOVEMENT ELECTRIC MACHINE AND CORRESPONDING ELECTRIC MACHINE

(30) Priorité: 07.10.1992 FR 9211899
(43) Date de publication de la demande: 26.07.1995
(73) Titulaire: SN ENO, F-79000 Niort (FR)
(72) Inventeur: MAKOWSKI, Bernard, F-79000 Niort (FR)
(74) Mandataire: Cournarie, Michèle
(86) Numéro de dépôt international: FR9300980
(87) Numéro de publication internationale: WO9408280

(56) Documents cités:
- EP-A- 0 142 594
- EP-A- 0 382 693
- EP-A- 0 389 459
- FR-A- 2 645 700
- US-A- 3 713 505
- PATENT ABSTRACTS OF JAPAN vol. 8, no. 101 (P-273) 12 Mai 1984 & JP,A,59 014 015 (KUBOTA TEKKO KK) 24 Janvier 1984
- PATENT ABSTRACTS OF JAPAN vol. 8, no. 105 (P-274) 17 Mai 1984 & JP,A,59 016 018 (KUBOTA TEKKO KK) 27 Janvier 1984
- PATENT ABSTRACTS OF JAPAN vol. 14, no. 571 (C-790) 19 Décembre 1990 & JP,A,22 049 518 (MITSUBISHI ELECTRIC CORP) 5 Octobre 1990
- PATENT ABSTRACTS OF JAPAN vol. 16, no. 468 (P-1429) 29 Septembre 1992 & JP,A,41 067 106 (MATSUSHITA ELECTRIC IND CO LTD) 15 Juin 1992
- PATENT ABSTRACTS OF JAPAN vol. 8, no. 101 (P-273) 12 Mai 1984 & JP-A-59 014 015
- PATENT ABSTRACTS OF JAPAN vol. 8, no. 105 (P-274) 17 Mai 1984 & JP-A-59 016 018
- PATENT ABSTRACTS OF JAPAN vol. 14, no. 571 (C-790) 19 Décembre 1990 & JP-A-22 049 518
- PATENT ABSTRACTS OF JAPAN vol. 16, no. 468 (P-1429) 29 Septembre 1992 & JP-A-41 067 106

## Description

L'invention concerne un procédé de contrôle du déplacement d'une machine électrique autonome à déplacement aléatoire, et une machine électrique mettant en oeuvre ce procédé, notamment dans le cas où ladite machine électrique est une tondeuse à gazon.

Depuis quelques années, on cherche à remplacer le travail fastidieux de tonte du gazon à l'aide de tondeuses guidées manuellement par un travail effectué par un robot fonctionnant de manière autonome. Un des problèmes à résoudre pour la mise en oeuvre d'un tel robot est le contrôle du déplacement de celui-ci lui permettant de respecter une limite périphérique de déplacement et d'éviter les obstacles tant fixes que mobiles tout en assurant que le déplacement aléatoire de la tondeuse couvre cependant la totalité du terrain à tondre. US-A-3 550 714 décrit une tondeuse se déplaçant de manière aléatoire dans une limite constituée d'un conducteur placé à la périphérie du terrain à tondre et émettant un signal capté par un détecteur monté sur la tondeuse. Le déplacement aléatoire est obtenu par inversion du sens de déplacement de la tondeuse et changement de direction à 90° lorsque le détecteur capte le signal émis par le conducteur. Mais cette tondeuse ne comporte aucun moyen de détection d'obstacles fixes (arbres, bacs à plantes, ...) ou mobiles (personnes, animaux, jouets, ...) susceptibles de se trouver dans un jardin.

Il est par ailleurs connu d'équiper des engins mobiles de détecteurs d'obstacles mais ces engins ne sont pas conçus pour effectuer un déplacement aléatoire dans une limite périphérique détectée par eux-mêmes.

Le problème consiste donc à contrôler le déplacement d'une machine électrique autonome à déplacement aléatoire comprenant un châssis comportant un avant et un arrière et un plan médian dans lequel passe l'axe de déplacement de la machine, au moins deux roues motrices et directrices, au moins un organe moteur d'entraînement des roues, au moins un détecteur d'obstacle ou de limite de déplacement, un moyen de gestion du déplacement de la machine en réponse à des signaux émis par le ou les détecteurs, pour assurer un déplacement aléatoire de la machine dans une limite périphérique en évitant les obstacles contenus dans cette limite et en assurant un passage sur la totalité de la surface délimitée.

Selon FR-A-2 645 700, on équipe une telle machine d'au moins deux détecteurs situés de part et d'autre du plan médian de la machine, on fait travailler la machine en marche avant, on inverse le sens de déplacement de la machine pendant un temps prédéterminé en réponse à un signal de détection d'obstacle ou de limite de déplacement, on change la direction de déplacement de la machine en la faisant tourner d'un angle prédéterminé à l'opposé de celui des détecteurs qui a émis le signal et on inverse à nouveau le sens de déplacement de la machine.

Selon la présente invention, l'angle prédéterminé est supérieur à 90° lorsque l'obstacle ou la limite de déplacement a été détecté pendant la marche avant de la machine et inférieur à 90° lorsque l'obstacle ou la limite de déplacement a été détecté pendant une marche arrière de la machine.

Lorsque la machine vient, au cours d'une marche arrière, buter sur un obstacle qui ne se trouvait pas dans sa trajectoire en marche avant (obstacle mobile par nature, personne, animal, ballon, ...) ou sur la limite de déplacement, on inverse le sens de déplacement sur une distance prédéterminée inférieure à la distance parcourue en marche arrière puis on effectue le changement de direction.

La limite de déplacement peut être conçue comme un obstacle matériel (bordure grillagée, muret, etc ...), auquel cas sa détection peut être effectuée par les détecteurs d'obstacles. Toutefois, la limite de déplacement est avantageusement constituée par un signal électrique ou magnétique émis par un conducteur situé à la périphérie du terrain et capté par un détecteur correspondant monté sur la machine.

Dans ce dernier cas, il est particulièrement intéressant d'équiper la machine de deux détecteurs destinés à capter le signal émis en périphérie du terrain pour constituer la limite de déplacement de la machine, les deux détecteurs étant situés de part et d'autre du plan médian de la machine, le changement de direction se faisant à l'opposé du détecteur ayant fonctionné.

En ce qui concerne les détecteurs d'obstacles, on utilise avantageusement deux détecteurs à l'avant, un gauche et un droit, tandis qu'à l'arrière on peut n'utiliser qu'un détecteur, le changement de direction se faisant à l'opposé du détecteur ayant fonctionné en marche avant quelle que soit la position de l'obstacle détecté en marche arrière.

Les détecteurs d'obstacles sont des détecteurs tactiles, fournissant un signal au moyen de gestion lorsqu'ils entrent en contact avec un objet, ou des détecteurs infrarouge émettant un signal lorsqu'un objet passe dans leur champ d'action. Evidemment, il est possible d'équiper la machine des deux types de détecteurs, en particulier pour éviter que la machine rentre en contact avec une personne ou un animal.

L'invention fournit également la machine électrique de mise en oeuvre du procédé telle que définie précédemment et équipée d'au moins deux détecteurs situés de part et d'autre de son plan médian.

Selon un mode de réalisation particulièrement avantageux, la machine ne comporte que deux roues motrices et directrices situées de part et d'autre de son plan médian, et une roue montée folle en un point situé dans le plan médian, tout changement de direction du déplacement de la machine étant obtenu par inversion du sens de rotation d'une roue par rapport à l'autre.

D'autres caractéristiques et avantages du procédé et de la machine selon la présente invention apparaîtront à la lecture de la description suivante faite en référence aux dessins annexés dans lesquels :
- la figure 1 représente schématiquement la suite des opérations effectuées par la machine lorsqu'elle rencontre un obstacle ou la limite de déplacement en marche avant, et
- la figure 2 représente schématiquement la suite des opérations effectuées par la machine lorsqu'elle rencontre un obstacle ou la limite de déplacement au cours de la marche arrière effectuée lors des opérations représentées sur la figure 1.

Il est entendu que la description suivante est faite en parlant d'une tondeuse mais qu'elle s'applique à toute machine électrique dont on désire contrôler le déplacement aléatoire dans une limite déterminée, en présence d'obstacles.

Sur les figures, la tondeuse 1 est représentée schématiquement comme étant constituée d'un châssis 1a, monté sur deux roues motrices directrices 2a, 2b et d'une roue 3 montée folle sur le châssis. De manière avantageuse, les deux roues motrices sont montées à l'avant du châssis de part et d'autre du plan médian, tandis que la roue 3 est montée en un point situé dans le plan médian. De cette manière, l'axe de déplacement de la tondeuse est contenu dans le plan médian.

La tondeuse est équipée de manière classique d'un ou deux moteurs d'entraînement des roues motrices, d'une source d'énergie pour ces moteurs qui peut être une batterie d'accumulateurs rechargeables ou une batterie alimentée par des capteurs solaires, et d'un organe de tonte entraîné par un moteur également relié à la batterie. Un moyen de gestion est relié aux différents moteurs et leur envoie des signaux de marche ou d'arrêt en fonction des signaux que ledit moyen reçoit des différents détecteurs décrits ci-dessous. Ce moyen peut être un moyen électromécanique ou électronique (microprocesseur) et est relié de manière classique aux détecteurs et aux moteurs d'entraînement équipant la tondeuse. Pour des raisons de lisibilité, ce moyen, les moteurs d'entraînement, l'organe de tonte, la batterie et les liaisons entre eux ne sont pas représentés sur les dessins.

La tondeuse est équipée de deux détecteurs tactiles 4a et 4b montés à l'avant de la tondeuse. L'utilisation de deux détecteurs distincts permet de déterminer de quel côté se trouve l'obstacle et permet de choisir en conséquence le sens du changement de direction, à l'opposé du côté où se trouve l'obstacle détecté. Les détecteurs sont montés non seulement à l'avant de la tondeuse mais se prolongent sur ses flancs, en particulier lorsque la tondeuse présente un avant de forme arrondie. Un détecteur tactile 5 est placé à l'arrière de la tondeuse et, de même, peut se prolonger sur les flancs lorsque la tondeuse présente un arrière de forme arrondie.

Deux détecteurs 6a et 6b sont prévus dans la tondeuse de part et d'autre de son plan médian et leur nature est choisie en fonction de la nature de la limite périphérique utilisée. Le signal émis par la limite peut être de nature électrique ou magnétique et les détecteurs 6a, 6b seront bien évidemment choisis de façon appropriée. L'emplacement des deux détecteurs, horsmis leur disposition de part et d'autre du plan médian, n'est pas déterminant pour le fonctionnement de la tondeuse.

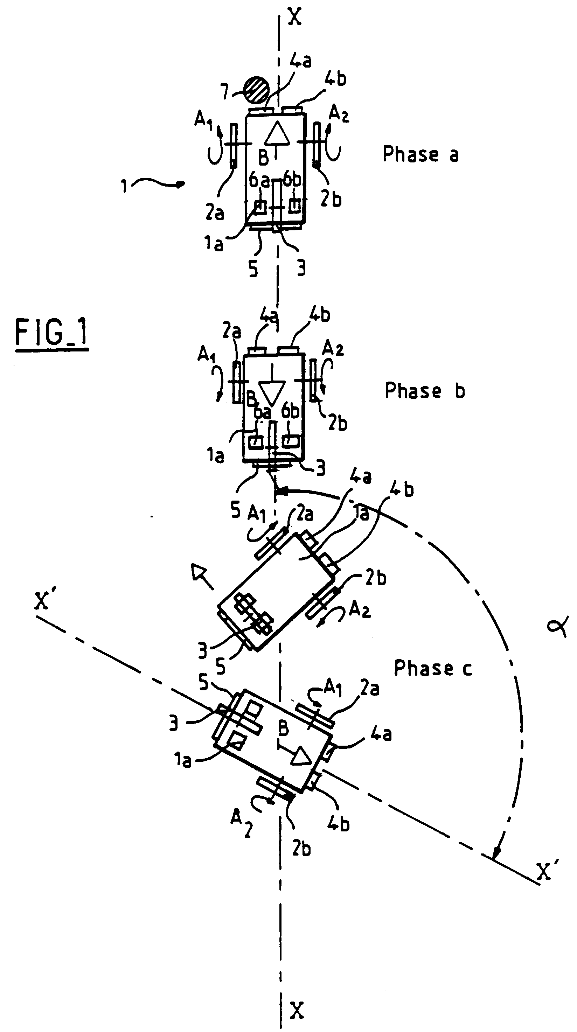

Sur la figure 1, les flèches A1 et A2 indiquent le sens de rotation des roues 2a et 2b respectivement et la flèche B indique le sens dans lequel se déplace la tondeuse au cours des différentes phases.

Dans la phase **a**, la tondeuse se déplace en marche avant selon l'axe XX. Lorsqu'un détecteur tactile vient en contact avec un obstacle 7 (dans le cas représenté sur la figure 1, l'obstacle est situé à gauche de l'axe XX et c'est alors le détecteur tactile 4a qui fonctionne), le signal émis par le détecteur 4a est transmis au moyen de gestion qui commande l'arrêt de la tondeuse et le passage à la phase **b**. Au cours de la phase **b**, la tondeuse se déplace selon l'axe XX mais en marche arrière sur une distance prédéterminée, par exemple 1 mètre, et s'arrête.

Le moyen de gestion donne alors l'ordre de passage à la phase **c** au cours de laquelle s'effectue un changement de direction du déplacement de la tondeuse. La roue 2a, située du côté du détecteur 4a qui a émis le signal de détection de l'obstacle 7, est mise en rotation en marche avant tandis que la roue 2b est mise en rotation en marche arrière pendant un temps prédéterminé aboutissant à un angle de rotation α prédéterminé. A la fin de la rotation, la tondeuse se trouve dirigée selon l'axe X'X' et elle reçoit l'ordre de partir en marcne avant.

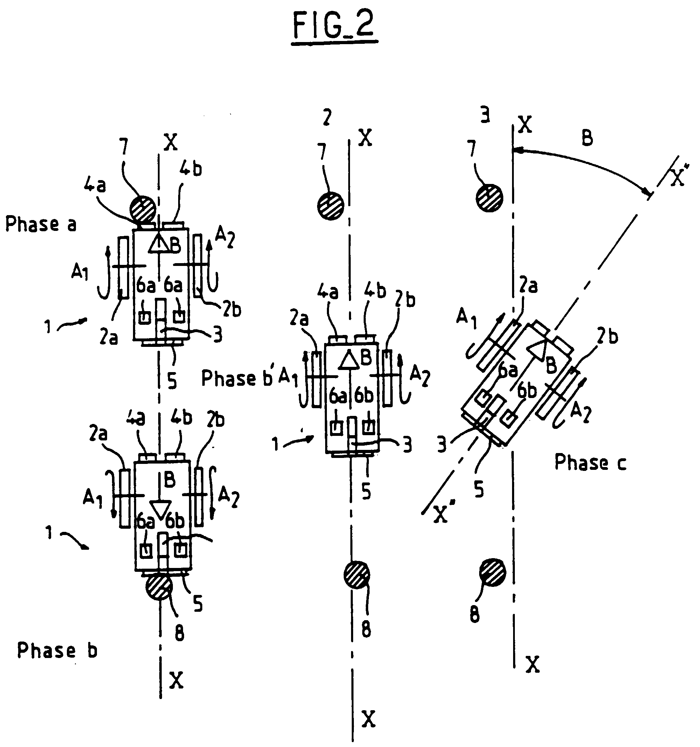

Si en cours de phase **b** (phase de recul), la tondeuse vient buter sur un obstacle 8 ou sur la limite de déplacement, le détecteur concerne (détecteur tactile 5 ou détecteurs 6a ou 6b) émet un signal et la tondeuse reçoit l'ordre de repartir en marche avant sur une distance inférieure à la distance préalablement parcourue en marche arrière. C'est la phase **b**' représentée sur la figure 2. La tondeuse s'arrête avant d'atteindre l'obstacle 7 et reçoit l'ordre de passer à la phase **c** avec rotation dans le sens prévu par la détection en phase **a** mais selon un angle β pour prendre l'axe de déplacement X"X". La tondeuse reçoit alors l'ordre de repartir en marche avant et se trouve libérée des obstacles 7 et 8 précédents. Bien entendu, les obstacles 7 et 8 peuvent également représenter la limite de déplacement de la tondeuse détectée par les détecteurs 6a et/ou 6b.

On a constaté que pour effectuer un déplacement aléatoire de la tondeuse assurant la couverture de la totalité du terrain enfermé dans la limite de déplacement, il est avantageux que l'angle α de changement de direction lors d'une détection avant soit supérieur à 90° alors que l'angle β de changement de direction en conséquence d'une détection arrière est inférieur à 90°.

Comme indiqué précédemment, lorsque la tondeuse ne comporte que deux roues motrices et directrices, le changement de direction est avantageusement effectué par inversion du sens de rotation des deux roues l'une par rapport à l'autre, la roue 3 montée folle sur le châssis suivant le mouvement de la tondeuse. Bien entendu, l'utilisation d'un nombre de roues motrices diffèrent est possible et le changement de direction s'opère alors avec déplacement soit pendant la marche arrière soit pendant la marche avant.

Lorsque la tondeuse 1 ne comporte que deux roues motrices 2a, 2b, il est avantageux d'équiper chacune des roues de son propre moteur d'entraînement, afin d'éviter un mécanisme complexe lorsque les deux roues doivent tourner en sens inverse.

L'organe de tonte de la tondeuse, ou tout outil monté sur une quelconque machine électrique, est entraîné par un moteur électrique distinct des moteurs d'entraînement des roues. On peut prévoir, et ceci le sera de manière générale dans le cas d'une tondeuse, que l'organe de tonte ou l'outil est mis en service par arrêt ou débrayage du moteur correspondant lors de la phase **b** et de la phase **c**, et éventuellement de la phase **b**'.

Les détecteurs tactiles 4a, 4b et/ou 5 peuvent être remplacés par d'autres types de détecteurs, par exemple des détecteurs à infrarouge qui signalent la présence d'un obstacle dans leur champ d'action. Comme indiqué précédemment et pour des raisons de sécurité, il est avantageux d'utiliser les détecteurs tactiles 4a, 4b et 5 et de leur adjoindre un détecteur à infrarouge permettant de déceler la présente d'un être vivant susceptible d'être surpris si la machine venait en contact avec lui.

Comme détecteurs tactiles, on peut citer les détecteurs sensibles à la pression. Sont particulièrement utiles, les conducteurs constitués par un tube de caoutchouc comportant des parties conductrices internes venant en contact lorsque le tube se trouve comprimé sur un obstacle et envoyant alors un signal au moyen de gestion de la tondeuse.

La tondeuse ou la machine électrique est équipée des dispositifs de sécurité nécessaires à son bon fonctionnement et à son bon usage. Par exemple, si l'outil de tonte venait à buter sur un obstacle passant sous la tondeuse (branche, cailloux ...), un détecteur contrôle le courant d'alimentation du moteur de l'outil de tonte et si son intensité dépasse une valeur prédéterminée, le moyen de gestion commande l'arrêt de la machine et lui fait exécuter les phases **a**, **b** et **c**. De même, si l'une ou les deux roues venaient à se trouver dans un trou ou une ornière du terrain, la tondeuse effectue les opérations **a**, **b** et **c**, et cela jusqu'à ce qu'elle réussisse à sortir de l'ornière. On peut prévoir que la tondeuse s'arrête lorsqu'elle a fait sans résultat **n** fois les phases **a**, **b** et **c**.

## Revendications

1. Procédé de contrôle du déplacement d'une machine électrique autonome à déplacement aléatoire comprenant un châssis (1a) comportant un avant et un arrière et un plan médian dans lequel passe l'axe de déplacement de la machine, au moins deux roues motrices et directrices (2a, 2b), au moins un organe moteur d'entraînement des roues, au moins un détecteur d'obstacle ou de limite de déplacement, un moyen de gestion du déplacement de la machine en réponse à des signaux émis par le ou les détecteurs, dans lequel on équipe la machine d'au moins deux détecteurs (4a, 4b) situés de part et d'autre du plan médian de la machine, on fait travailler la machine en marche avant, on inverse le sens de déplacement de la machine sur une distance prédéterminée en réponse à un signal de détection d'obstacle ou de limite de déplacement, on change la direction de déplacement de la machine en la faisant tourner d'un angle prédéterminé à l'opposé de celui des détecteurs (4a, 4b) qui a émis le signal, et on inverse à nouveau le sens de déplacement de la machine, caractérisé en ce que l'angle prédéterminé est supérieur à 90° lorsque l'obstacle ou la limite de déplacement a été détecté pendant la marche avant de la machine, et inférieur à 90° lorsque l'obstacle ou la limite de déplacement a été détecté pendant une marche arrière de la machine.

2. Procédé selon la revendication 1,caractérisé en ce que, en réponse à un signal de détection émis pendant une marche arrière, on inverse le sens de déplacement sur une distance prédéterminée inférieure à la distance parcourue en marche arrière puis on effectue le changement de direction.

3. Procédé selon l'une ou l'autre des revendications 1 et 2, caractérisé en ce qu'on utilise deux détecteurs électromagnétiques situés de part et d'autre du plan médian de la machine pour détecter la présence d'un champ électrique ou magnétique émis par une boucle fermée de fil électrique constituant la limite de déplacement de la machine.

4. Procédé selon l'une quelconque des revendications 1 à 3, caractérisé en ce qu'on utilise des détecteurs tactiles ou infrarouge pour détecter des obstacles situés à l'intérieur de la limite de déplacement de la machine.

5. Procédé selon l'une quelconque des revendications 1 à 4, appliqué à une machine équipée d'un outil agissant sur la surface délimitée par la limite de déplacement, caractérisé en ce qu'on arrête le fonctionnement de l'outil lors des inversions de sens de déplacement de la macnine et lors du changement de direction.

## Patentansprüche

1. Verfahren zur Steuerung der Fortbewegung einer unabhängigen Elektromaschine mit aleatorischer Fortbewegung, umfassend ein Fahrgestell (1a) mit einem Vorderteil und einem Hinterteil und einer Mittelebene, in der die Fortbewegungsachse der Maschine verläuft, mindestens zwei Antriebs- und Lenkräder (2a, 2b), mindestens ein Antriebsorgan für den Antrieb der Räder, mindestens einen Hindernis- oder Fortbewegungsgrenzen-Detektor, mindestens eine Einrichtung zur Steuerung der Fortbewegung der Maschine ansprechend auf von dem oder den Detektoren ausgesandte Signale, bei welchem man die Maschine mit mindestens zwei Detektoren (4a, 4b) ausstattet, die beiderseits der Mittelebene der Maschine gelegen sind, man die Maschine in Vorwärtsfahrt arbeiten läßt, man die Fortbewegungsrichtung der Maschine ansprechend auf ein Hindernis- oder Fortbewegungsgrenzen-Erkennungssignal über eine vorbestimmten Wegstrecke umkehrt, man die Fortbewegungsrichtung der Maschine verändert, indem man sie sich entgegengesetzt zu demjenigen der Detektoren (4a, 4b), der das Signal ausgesandt hat, um einen vorbestimmten Winkel drehen läßt, und man die Fortbewegungsrichtung der Maschine erneut umkehrt, dadurch gekennzeichnet, daß der vorbestimmte Winkel größer ist als 90°, wenn das Hindernis oder die Fortbewegungsgrenze während einer Vorwärtsfahrt der Maschine erkannt worden ist, und kleiner als 90°, wenn das Hindernis oder die Fortbewegungsgrenze während einer Rückwärtsfahrt der Maschine erkannt worden ist.

2. Verfahren nach Anspruch 1, dadurch gekennzeichnet, daß man ansprechend auf ein während einer Rückwärtsfahrt ausgesandtes Erkennungssignal die Fortbewegungsrichtung über eine vorbestimmte Wegstrecke umkehrt, die kleiner ist als die in Rückwärtsfahrt zurückgelegte Wegstrecke, und daß man dann die Richtungsänderung ausführt.

3. Verfahren nach Anspruch 1 oder 2, dadurch gekennzeichnet, daß man zwei beiderseits der Mittelebene der Maschine gelegene elektromagnetische Detektoren verwendet, um das Vorhandensein eines elektrischen Felds oder eines Magnetfelds festzustellen, das von einer die Fortbewegungsgrenze der Maschine bildenden geschlossenen Schleife aus Leiterdraht ausgesandt wird.

4. Verfahren nach einem beliebigen der Ansprüche 1 bis 3, dadurch gekennzeichnet, daß man Berührungs- oder Infrarot-Detektoren verwendet, um Hindernisse zu erkennen, die sich innerhalb der Fortbewegungsgrenze der Maschine befinden.

5. Verfahren nach einem beliebigen der Ansprüche 1 bis 4, angewandt auf eine Maschine, die mit einem Werkzeug ausgestattet ist, das auf die von der Fortbewegungsgrenze begrenzte Oberfläche einwirkt, dadurch gekennzeichnet, daß man den Betrieb des Werkzeugs bei Fortbewegungsrichtungsumkehrungen der Maschine und bei der Richtungsänderung anhält.

## Claims

1. A process for controlling the movement of a self-propelled random movement electric machine, comprising a chassis (1a) having a front and a rear and a centerplane through which the axis of movement of the machine passes, at least two drive and steering wheels (2a, 2b), at least one wheel drive unit, at least one obstruction or movement boundary sensor, a means for controlling the movement of the machine in response to signals transmitted by the sensor or sensors, wherein the machine is equipped with at least two sensors (4a, 4b) mounted on either side of the machine centerplane, the machine is caused to move forward, the direction of movement of the machine is reversed over a predetermined distance in response to a signal indicating the sensing of an obstruction or of the movement boundary, the direction of travel of the machine is changed by causing it to turn a preset angle opposite that of the sensors (4a, 4b) which has transmitted the signal, and the direction of movement of the machine is again reversed, characterized in that the preset angle is greater than 90° if the obstacle or the movement boundary has been sensed during forward movement of the machine, and less than 90° if the obstruction or movement boundary has been sensed during rearward movement of the machine.

2. A process according to Claim 1, characterized in that in response to a sensing signal transmitted during rearward movement, the direction of movement is reversed over a predetermined distance which is shorter than the distance travelled rearward, and the direction of travel is then changed.

3. A process according to Claim 1 or Claim 2, characterized in that two electromagnetic sensors are used, mounted on either side of the machine centerplane, to sense the presence of an electric or magnetic field generated by a closed loop of electric wire forming the movement boundary of the machine.

4. A process according to any of Claims 1 to 3, characterized in that tactile or infrared sensors are used to sense obstructions located within the movement boundary of the machine.

5. A process according to any of Claims 1 to 4, applied to a machine equipped with a tool acting on the area bounded by the movement boundary, characterized in that the operation of the tool is stopped during reversals of movement of the machine and during the change in direction of travel.
